(19) Europäisches Patentamt
European Patent Office
Office européen des brevets

(11) EP 4 806 716 A1

(12) EUROPEAN PATENT APPLICATION

(43) Date of publication:
**16.09.2026 Bulletin 2026/38**

(21) Application number: **26163196.4**

(22) Date of filing: **09.03.2026**

(51) International Patent Classification (IPC):
***B60L 53/10*** *(2019.01)* ***B60L 53/30*** *(2019.01)*
***B60L 53/302*** *(2019.01)* ***B60L 53/62*** *(2019.01)*
***H02J 7/92*** *(2026.01)* ***H02J 7/90*** *(2026.01)*
***H02M 7/23*** *(2006.01)* *B60L 53/67 (2019.01)*
*H02J 7/40 (2026.01)*

(52) Cooperative Patent Classification (CPC):
**B60L 53/11; B60L 53/30; B60L 53/302; B60L 53/62; H02J 1/14; H02J 7/92; H02J 7/975; H02M 3/1584;** B60L 53/67; H02J 7/40; H02M 1/0032; H02M 1/0048

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.03.2025 KR 20250030530**

(71) Applicant: **LG Innotek Co., Ltd.**
**Seoul 07796 (KR)**

(72) Inventor: **KWON, Gook Min**
**07796 SEOUL (KR)**

(74) Representative: **Plasseraud IP**
**104 Rue de Richelieu**
**CS92104**
**75080 Paris Cedex 02 (FR)**

# (54) ELECTRIC VEHICLE CHARGER INCLUDING POWER MODULE AND OPERATING METHOD THEREOF

(57) A method of operating an electric vehicle (EV) charger including a power module according to embodiments of the present invention includes determining a required charging amount of an EV, determining the number of power modules required for satisfying the required charging amount of the EV when an EV charger operates power modules at maximum load efficiency, determining whether the number of power modules disposed in the EV charger is greater than the number of determined power modules, determining a load factor that becomes the maximum load efficiency of the power modules when the number of power modules disposed in the EV charger is greater than the number of determined power modules, determining whether the power modules are operable at the determined load factor, and when the power modules are operable at the determined load factor, operating the power modules in consideration of heat generation rates of the power modules, wherein the required charging amount is a charging power amount or a charging voltage.

EP 4 806 716 A1

## Description

CROSS-REFERENCE TO RELATED APPLICATION

This application claims priority to and the benefit of Korean Patent Application No. 2025-0030530, filed on March 10, 2025, the disclosure of which is incorporated herein by reference in its entirety.

BACKGROUND

### 1. Field of the Invention

The present invention relates to an electric vehicle (EV) charger including a power module and an operating method thereof, and more specifically, to an EV charger including a plurality of power modules and a method of operating the same with high efficiency.

### 2. Discussion of Related Art

An electric vehicle (EV) charging station is infrastructure designed to charge electric vehicles (EVs) and plug-in hybrid vehicles (PHEVs). EV charging stations may be provided in a variety of forms according to charging speed, technology, and installation locations. EV charging stations may be installed in a variety of locations such as homes, public spaces, highways, and commercial charging stations. The type of EV charger to be installed may vary according to each location and purpose.

An EV charging station typically has a plurality of EV chargers. The plurality of EV chargers may be the same type or different types. EV charger types are mainly classified according to their charging speed. EV charger types may be classified into slow EV chargers that charge with relatively low power and take a long time to charge, rapid EV chargers that charge with high voltage, ultra-fast EV chargers capable of charging with ultra-high power, and wireless EV chargers capable of charging in a wireless manner. The rapid EV chargers and the ultra-rapid EV chargers, which are capable of performing rapid charging, may usually have a plurality of power modules formed in parallel to provide high output to EVs. When power modules provide high power, heat generation may become a problem. As one of measures to solve this heat generation, a cooling method is applied to the power modules. There are an air-cooling method and a water-cooling method as cooling methods, the air-cooling method is a method of cooling heat-generating electrical components using a fan, and the water-cooling method is a cooling method that introduces a non-conductive material into power modules. The heat generation of the power modules is also related to a load factor. When the load factor of the power modules increases, heat generation increases, which may decrease the efficiency of the power modules. Furthermore, when the load factor of the power modules increases, output power may increase, which may reduce the charging time of the EV. However, the cost of the EV charger may increase.

Therefore, EV chargers need an operating method that can increase efficiency by appropriately adjusting a load factor of the power modules.

SUMMARY OF THE INVENTION

The present invention is directed to providing an electric vehicle (EV) charger including a power module and a method of operating the power module of the EV charger.

The present invention is also directed to providing a method that allows an EV charger to operate a power module at maximum load efficiency.

The present invention is directed to providing a method that allows an EV charger to operate a power module while minimizing heat generation.

In addition, the technical problems to be solved by the present invention are not limited to the above-described technical problems, and other technical problems may be further present.

According to an aspect of the present invention, there is provided a method of operating an EV charger including a power module, which includes determining a required charging amount of an EV, determining the number of power modules required for satisfying the required charging amount of the EV when an EV charger operates power modules at maximum load efficiency, determining whether the number of power modules disposed in the EV charger is greater than the number of determined power modules, determining a load factor that becomes a maximum load efficiency of the power modules when the number of power modules disposed in the EV charger is greater than the number of determined power modules, determining whether the power modules are operable at the determined load factor, and when the power modules are operable at the determined load factor, operating the power modules in consideration of heat generation rates of the power modules, wherein the required charging amount is a charging power amount or a charging voltage.

In the method of operating an EV charger including a power module according to embodiments of the present invention, the operating of the power modules in consideration of the heat generation rates of the power modules may include selecting and operating the power modules in ascending order of heat generation rate to satisfy the required charging amount of the EV.

The method of operating an EV charger including a power module according to embodiments of the present invention may further include increasing a load factor of a power module having a low heat generation rate and operating the power modules when the power modules are inoperable at the determined load factor.

The method of operating an EV charger including a power module according to embodiments of the present invention may further include determining whether a maximum power amount of the power modules disposed in the EV charger is greater than the required charging amount of the EV when the number of power modules disposed in the EV charger is smaller than the number of determined power modules, and operating the power modules disposed in the EV charger to produce the maximum power amount when the maximum power amount of the power modules disposed in the EV charger is smaller than the required charging amount of the EV.

The method of operating an EV charger including a power module according to embodiments of the present invention may further include determining a load factor of the power modules for satisfying the required charging amount of the EV when the maximum power amount of the power modules disposed in the EV charger is greater than the required charging amount of the EV, determining whether the power modules are operable at the determined load factor, and operating the power modules in consideration of the heat generation rates of the power modules when the power modules are operable at the determined load factor.

The method of operating an EV charger including a power module according to embodiments of the present invention may further include determining a load factor of the power modules for satisfying the required charging amount of the EV when the maximum power amount of the power modules disposed in the EV charger is greater than the required charging amount of the EV, determining whether the power modules are operable at the determined load factor, and increasing a load factor of a power module having a low heat generation rate and operating the power modules when the power modules are inoperable at the determined load factor.

In the method of operating an EV charger including a power module according to embodiments of the present invention, the power module may be provided as a plurality of power modules, and power outputs of the plurality of power modules may be the same.

In the method of operating an EV charger including a power module according to embodiments of the present invention, the determining of the number of power modules required for satisfying the required charging amount of the EV may include determining the number of power modules using the following equation: required number of power modules = required charging amount of EV / (capacity of power module * maximum load efficiency of power module).

In the method of operating an EV charger including a power module according to embodiments of the present invention, the heat generation rate of the power module may be a heat generation rate in consideration of the heat generation rates of the power modules itself and an arrangement of the power modules in the EV charger.

In the method of operating an EV charger including a power module according to embodiments of the present invention, the determining of the load factor that becomes the maximum load efficiency of the power modules may include determining a load factor using a lookup table that indicates load efficiency according to the load factor of the power modules.

## BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1A is an internal block diagram of an electric vehicle (EV) charger in an EV charging station according to one embodiment;

FIG. 1B is a schematic block diagram illustrating an interior of a power module according to one embodiment of the present invention;

FIG. 2 is a diagram illustrating an example in which the EV charger charges an EV at the EV charging station;

FIG. 3 is a graph showing charging efficiency according to a load factor of the power modules included in the EV charger;

FIGS. 4A and 4B are diagrams illustrating examples in which the EV charger charges an EV in consideration of a charging capacity required by the EV according to one embodiment of the present invention; and

FIGS. 5A and 5B are flowcharts illustrating a process in which the EV charger according to one embodiment of the present invention operates the power module in order to charge an EV.

DETAILED DESCRIPTION OF EXEMPLARY EMBODIMENTS

Hereinafter, exemplary embodiments of the present invention will be described in detail with reference to the accompanying drawings.

However, the technical idea of the present invention is not limited to some embodiments to be described but may be implemented in various different forms, and, within the scope of the technical idea of the present invention, one or more among components in the embodiments may be used by being selectively combined and substituted.

Further, unless specifically defined and described, terms used in the embodiments of the present invention (including technical and scientific terms) may be construed as meanings which are generally understood by those skilled in the art to which the present invention pertains, and generally used terms such as terms defined in dictionaries may be interpreted in consideration of the contextual meaning of the related art.

In addition, terms used in the embodiments of the present invention are intended to describe the embodiments and are not intended to limit the present invention.

In the present specification, the singular forms may include the plural forms unless the context clearly dictates otherwise, and when described as "at least one (or one or more) among A, B, and (or) C," it may include one or more of all possible combinations of A, B, and C.

In addition, in describing components of embodiments of the present invention, the terms first, second, A, B, (a), (b), and the like can be used.

These terms are intended to distinguish one component from other components, but the nature and the order or sequence of the components is not limited by those terms.

Further, when a component is described as being "linked," "coupled," or "connected" to another component, the component is not only directly linked, coupled, or connected to the other component, but also "linked," "coupled," or "connected" to another component by still another component between the component and another component.

Further, when a component is described as being formed or disposed "on (above) or under (below)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

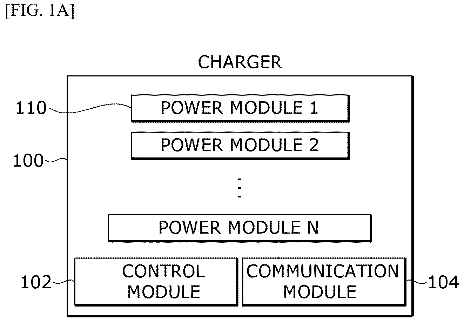

FIG. 1A is an internal block diagram of an electric vehicle (EV) charger in an EV charging station according to one embodiment.

A plurality of EV chargers may be disposed in the EV charging station. Referring to FIG. 1A, one EV charger 100 may include a control module 102, a communication module 104, and a plurality of power modules 110. Specifically, the control module 102 may control the internal components of the EV charger 100. For example, the control module 102 may set an output of the plurality of power modules 110 or control their on/off. In addition, the control module 102 may perform an operation of the EV charger, which will be described below. The communication module 104 may communicate with components inside or outside the EV charger 100. The communication module 104 may transmit required data or transfer received data to the components inside the EV charger 100. The power module 110 may generate an output for charging an EV. The power module 110 may control a load factor or output power according to the settings of the control module 102 to output power (or voltage and current).

According to one embodiment, the EV may be charged through one power module 110 or the plurality of power modules 110. When the EV charger is a rapid EV charger, the EV charger may support fast charging of hundreds of kW. Each power module 110 may output a capacity of several tens of kW, and the EV charger 100 may also output a large capacity by connecting the power modules 110 in parallel.

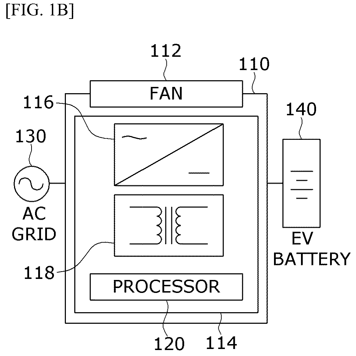

FIG. 1B is a schematic block diagram illustrating an interior of a power module according to one embodiment of the present invention.

Referring to FIG. 1B, the power module 110 may include a fan 112, a substrate 114, an AC/DC rectifier 116, a DC/DC converter 118, and a processor 120. According to one embodiment, the power module 110 may be externally connected to an AC grid 130 to receive power and connected to a battery 140 of the EV to supply power. According to one embodiment, the power module 110 may be a bidirectional module. That is, the power module 110 may receive power from the battery 140 of the EV to supply the power to the AC grid 130, but this is beyond the scope of the present invention and thus will not be described any further.

Specifically, the fan 112 is coupled to a housing (not shown) of the power module 110 and may perform a function of discharging heat inside the power module 110 to the outside. The fan 112 may be disposed on one surface of the housing (not shown) of the power module 110 or disposed on one surface not in direct contact with other components outside the power module 110.

According to one embodiment, the substrate 114 may be a component on which electrical components of the power module 110 are disposed. In the power module 110 according to the embodiment of the present invention, the AC/DC rectifier 116, the DC/DC converter 118, and the processor 120 may be disposed on the substrate 114. In addition, a

temperature sensor for measuring or predicting an external temperature of the power module 110 may be disposed on the substrate 114.

The AC/DC rectifier 116 may convert power supplied from the AC grid 130 into DC power. According to one embodiment, since the AC/DC rectifier 116 may generate heat, the AC/DC rectifier 116 may include a plurality of temperature sensors capable of measuring a temperature inside the AC/DC rectifier 116. Since the AC/DC rectifier 116 is a heat-generating component, a temperature of the AC/DC rectifier 116 may be higher than a temperature of any other location inside the power module 110. Therefore, the temperature sensor included in the AC/DC rectifier 116 may be a reference for determining whether other temperature sensors disposed in the power module 110 are faulty.

The DC/DC converter 118 may convert DC power into DC power. The power module 110 may output various DC power levels within a predetermined range, and thus the DC/DC converter 118 may be included in the power module 110.

The processor 120 may control each component of the power module 110. For example, the processor 120 may control the operation of each component in the power module 110 operates and cause the AC/DC rectifier 116 to measure an internal temperature. In addition, the processor 120 may control an output of the power module 110. Specifically, the processor 120 may control the output of the power module 110 by measuring or predicting a temperature outside the power module 110 using a temperature sensor inside the power module 110. For example, when the temperature outside the power module 110 is determined to be sufficiently low, the processor 120 may control the output of the power module 110 to be at its maximum, otherwise, the processor 120 may control a strength (or magnitude) of the output of the power module 110 on the basis of the measured or predicted temperature outside the power module 110.

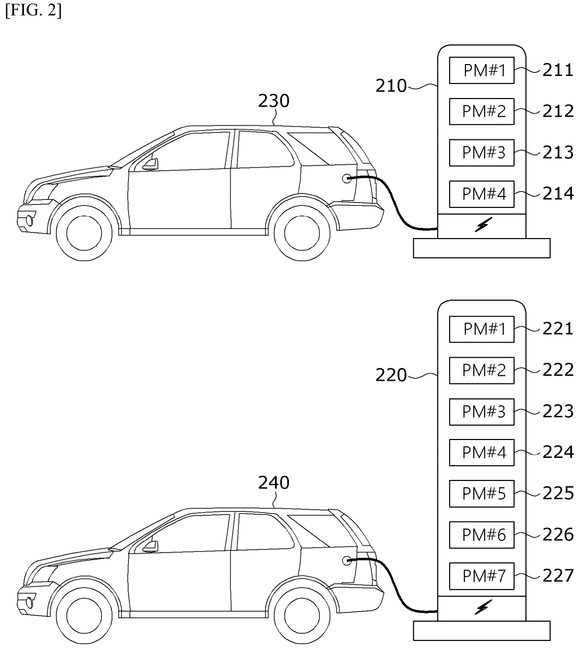

FIG. 2 is a diagram illustrating an example in which the EV charger charges an EV at the EV charging station.

A plurality of EV chargers may be disposed in the EV charging station. Each EV charger may include a plurality of power modules, and the number of power modules is not limited. Referring to FIG. 2, two EV chargers, i.e., a first EV charger 210 and a second EV charger 220, are disposed in the EV charging station. The first EV charger 210 includes four power modules 211, 212, 213, and 214, and the second EV charger 220 includes seven power modules 221, 222, 223, 224, 225, 226, and 227. The power modules included in the first EV charger 210 and the second EV charger 220 may be the same, but the present invention is not limited thereto. For example, the first EV charger 210 may include one type of power module, and the second EV charger 220 may include another type of power module. Alternatively, the first EV charger 210 may include one type of power module, and the second EV charger 220 may include a plurality of types of power modules.

An EV connected to the EV charger may be charged at a maximum output of the EV charger. For example, when all the power modules included in the first EV charger 210 and the second EV charger 220 have an output power of 25 kW, a first EV 230 connected to the first EV charger 210 may be charged at an output power of 25 kWx4=100 kW, and a second electric vehicle 240 connected to the second EV charger 220 may be charged at an output power of 25 kWx7=175 kW.

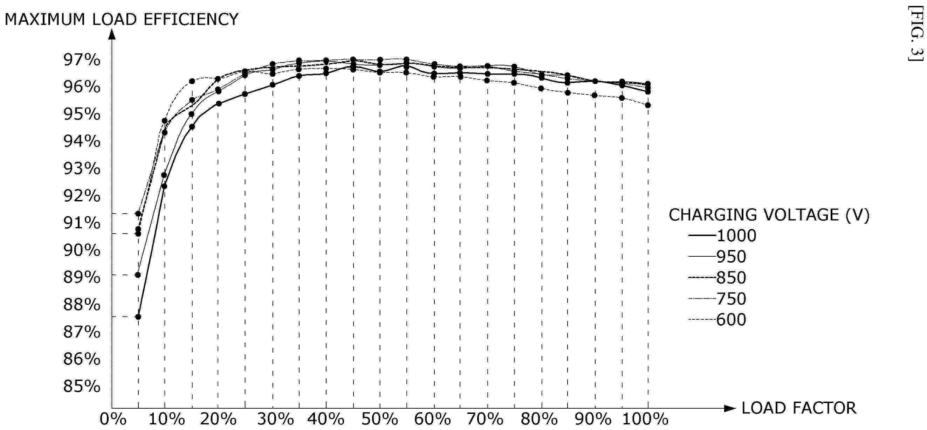

However, charging an EV at the maximum output of all the power modules included in the EV charger may not necessarily result in charging at maximum load efficiency. Hereinafter, FIG. 3 is a graph illustrating this.

FIG. 3 is a graph showing charging efficiency according to a load factor of the power modules included in the EV charger.

A load factor of the power modules may be related to the output power of the power module. When the load factor of the power modules is maximum, the power module may be in a maximum output state.

Referring to FIG. 3, when the load factor is low, for example, when the load factor is 20% or less, charging efficiency increases gradually as the load factor increases. However, when the load factor is greater than or equal to a certain level (e.g., 35%), the charging efficiency does not change significantly. Rather, it can be seen that the charging efficiency decreases as the load factor increases. In summary, the charging efficiency may not be maximum when the load factor is maximum.

In addition, the charging efficiency may vary according to the load factor depending on a charging voltage of the EV connected to the EV charger. FIG. 3 shows a case in which the charging voltages of the electric vehicle are 600 V, 750 V, 850 V, 950 V, and 1000 V. Referring to FIG. 3, it can be seen that, as the charging voltage of the EV is higher and the load factor is lower, the charging efficiency is lower. However, the charging efficiency according to the load factor is not proportional or inversely proportional to the charging voltage of the EV, and the charging efficiency at a specific load factor is not high overall regardless of the charging voltage of the EV. That is, the load factor at which the charging efficiency is maximum may vary according to the charging voltage of the EV.

In summary, in order to charge the EV at maximum load efficiency, it can be seen that considering of the charging voltage of the EV in addition to the load factor of the power modules is necessary.

In FIG. 3, the description is made according to the charging voltage of the EV, but the same description may be applied according to a charging capacity. In addition, the charging efficiency may vary according to an AC voltage connected to the EV charger. EV chargers may be installed in many countries, and the power supply in each country may differ. In the present invention, the AC voltage connected to the EV charger is not considered.

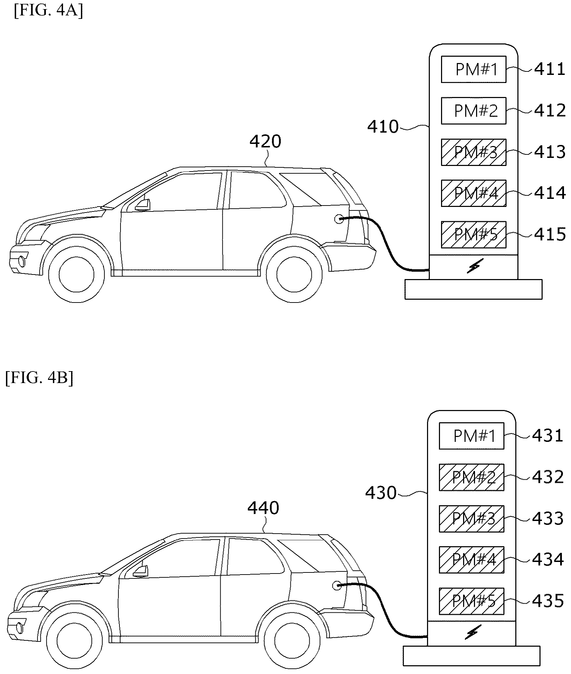

FIGS. 4A and 4B are diagrams illustrating examples in which the EV charger charges an EV in consideration of a charging capacity required by the EV according to one embodiment of the present invention.

According to one embodiment, the EV may be an EV required to be charged at a power of 70 kW. Each EV charger

includes five power modules, and each power module may have the same capacity of 25 kW. Each EV charger may output power of 125 kW at maximum.

Referring to FIG. 4A, an EV charger 410 includes five power modules 411, 412, 413, 414, and 415 and may use three power modules 413, 414, and 415 to charge an EV 420. The EV charger 410 may be an EV charger that sets a capacity of power modules being used at maximum, that is, a load factor, and uses the capacity. Since power of 70 kW cannot be output using one power module, the EV charger 410 may determine to use another power module. However, since the power of 70 kW cannot be output even using two power modules, the EV charger 410 may determine to use one more power module. In this case, the EV charger 410 may output up to 75 kW using three power modules, and since the charging capacity required by the EV 420 is 70 kW, the EV charger 410 may allow two power modules 414 and 415 to output their power at maximum and allow one power module 413 to output only a portion of its power. That is, the EV charger 410 may set each of the fourth and fifth power modules 414 and 415 to output 25 kW and set the third power module 413 to output 20 kW. Although the sequential use of the power modules is described in FIG. 4A, the present invention is not limited thereto. For example, the EV charger 410 may set each of the first power module 411 and the fifth power module 415 to output 25 kW and set the third power module 413 to output 20 kW.

Referring to FIG. 4B, the EV charger 430 may be an EV charger that charges an EV 440 in consideration of charging efficiency. The EV charger 430 of FIG. 4B may also include five power modules 431, 432, 433, 434, and 435. The EV charger 430 may first determine the number of available power modules. Thereafter, the EV charger 430 may determine at what percentage of a load factor of the available power modules should be used to charge the EV 440 at maximum load efficiency. According to one embodiment, the EV charger 430 may determine load efficiency according to the load factor using a lookup table. The EV charger 430 may determine the output power of a power module determined in consideration of heat circulation according to a heat generation rate of the power module. For example, when maximum charging efficiency is obtained by setting a load factor of each of four power modules to 70%, the power module to be used may be selected in consideration of the heat generation rate of the power module. When the heat generation rates of the power modules included in the EV charger 430 increase in the order of the fifth power module 435, the fourth power module 434, the third power module 433, the second power module 432, and the first power module 431, the EV charger 430 may determine to use the power modules in the order of the second power module 432, the third power module 433, the fourth power module 434, and the fifth power module 435. As another example, when the maximum charging efficiency is obtained by setting a load factor of each of three power modules to 100%, 100%, and 80%, respectively, the power module to be used may be selected in consideration of the heat generation rate of the power module. When the heat generation rates of the power modules included in the EV charger 430 are the same as described above, the EV charger 430 may select the fifth power module 435, the fourth power module 434, and the third power module 433 and set the load factor of the fifth power module 435 and the fourth power module 434 to 100% and set the load factor of the third power module 433 to 80%. As still another example, when the maximum charging efficiency is obtained by setting the load factor of each of the three power modules to 93%, 93%, and 93%, respectively, the power module to be used may be similarly selected in consideration of the heat generation rate of the power module. When the heat generation rates of the power modules included in the EV charger 430 are the same as described above, the EV charger 430 may select the fifth power module 435, the fourth power module 434, and the third power module 433.

According to one embodiment, even when the power outputs of the power modules are the same, the heat generation rates of the power modules included in the EV charger 430 may vary according to a stacked structure of the power modules, an air circulation structure according to an internal structure of the EV charger 430, and the like. The EV charger 430 may select a power module intended to be operated after storing the heat generation rates in advance in consideration of the stacked structure of the power modules and the air circulation structure according to the internal structure of the EV charger 430) and using the stored heat generation rates.

According to one embodiment, the EV charger 430 may calculate maximum load efficiency according to a load factor using a predetermined equation. Alternatively, the EV charger 430 may store in advance a load factor of the power modules for achieving maximum load efficiency according to a charging amount required by an EV and use the stored load factor. According to another embodiment, the EV charger 430 may select a power module intended to be used by further considering whether the power module has been used before, the most recent use time, and a temperature value measured by the temperature sensor disposed in the power module.

Hereinafter, a method of operating a power module in order to enable an EV charger to charge an EV will be described in detail.

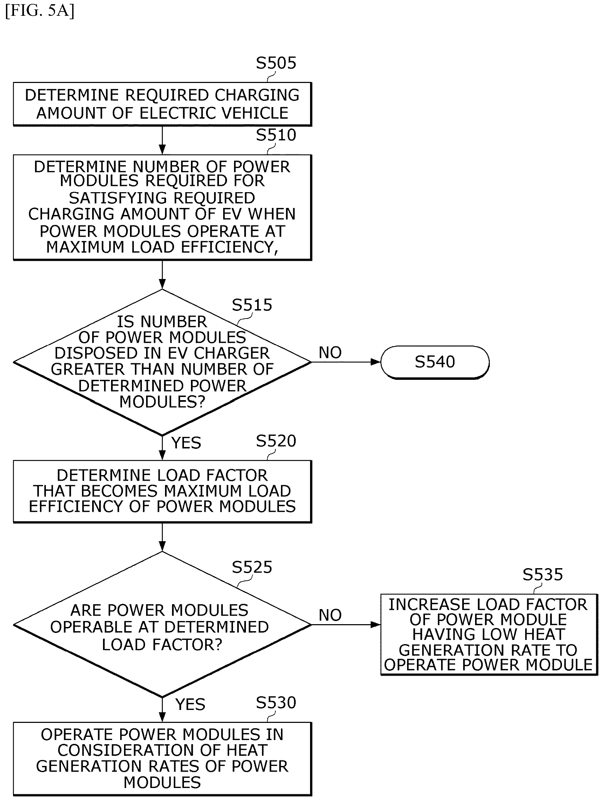

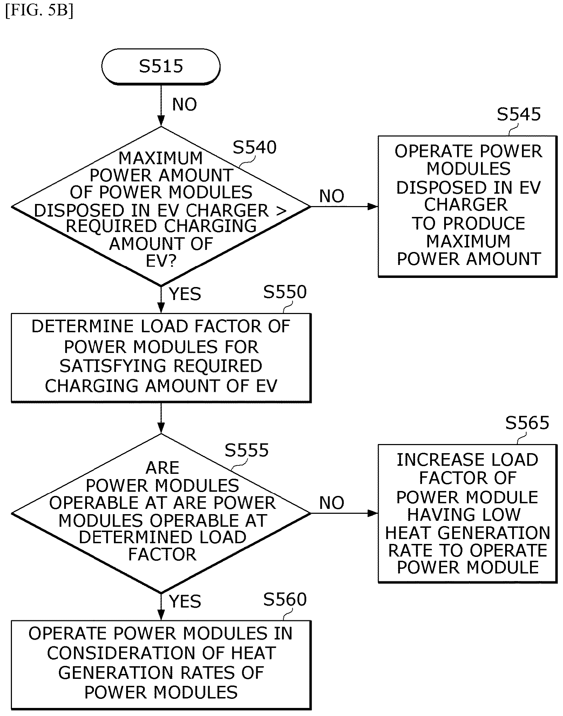

FIGS. 5A and 5B are flowcharts illustrating a process in which the EV charger according to one embodiment of the present invention operates the power module in order to charge an EV.

Referring to FIGS. 5A and 5B, the EV charger may determine a required charging amount of the EV (S505). The EV charger may receive the required charging amount from the EV using an internal communication module. A power amount may be received as the required charging amount of the EV, but the present invention is not limited thereto. For example, the EV may receive a voltage as the required charging amount. Alternatively, the EV may receive both voltage and power as the required charging amount.

When the EV charger operates the internal power modules at maximum load efficiency, the EV charger may determine the number of power modules required for satisfying the required charging amount of the EV (S510). According to one embodiment, the number of power modules required for satisfying the required charging amount of the EV may be derived using Equation 1.

required number of power modules = required charging amount of EV / (capacity of power module * maximum load efficiency of power module)

For example, when the required charging amount of the EV is 60 kW, the capacity of one power module is 25 kW, and the maximum load efficiency of the power module is 85%, the required number of power modules may be 2.82. Therefore, in order to charge the EV at maximum load efficiency, three power modules may be necessary.

The EV charger may check or determine whether the number of power modules disposed therein is greater than the number of determined power modules (S515). The EV charger may determine the number of power modules disposed therein regardless of whether the power modules disposed therein are operable.

When the number of power modules disposed in the EV charger is greater than the number of determined power modules, the EV charger may determine a load factor that becomes the maximum load efficiency of the power modules (S520). In one embodiment, the EV charger may determine a load factor that becomes the maximum load efficiency of the power module using a look-up table. The lookup table may indicate the load efficiency according to the load factor of the power modules.

The EV charger may check or determine whether the power modules are operable at the determined load factor (S525). Some of the power modules disposed in the EV charger may not be usable. For example, a faulty power module or a power module being used to charge another EV may be inoperable. Therefore, the EV charger may check or determine an operable power module.

When the power modules are operable at the determined load factor, the EV charger may operate the power modules in consideration of heat generation rates of the power modules (S530). For example, when four power modules are disposed in the EV charger, and three power modules are required when operating at the maximum load, the EV charger may select power modules intended to be operated among the four power modules in consideration of the heat generation rates. For example, the EV charger may select power modules intended to be operated in ascending order of heat generation rate. Alternatively, the EV charger may select the power modules intended to be operated in consideration of an arrangement of the power modules.

In one embodiment, the heat generation rate of the power module may refer to the heat generation rate of the power module itself, but may also be a heat generation rate in further consideration of the arrangement of the power modules in the EV charger.

When the power modules cannot operate at the determined load factor, the EV charger may increase a load factor of a power module having a low heat generation rate to operate the power module (S535).

When the number of power modules disposed in the EV charger is smaller than the number of determined power modules, the EV charger may determine whether a maximum power amount of the power modules disposed therein is greater than the required charging amount of the EV (S540).

When the maximum power amount of the power modules disposed in the EV charger is smaller than the required charging amount of the EV, the EV charger may operate the power modules disposed therein to produce the maximum power amount (S545).

When the maximum power amount of the power modules disposed in the EV charger is greater than the required charging amount of the EV, the EV charger may determine a load factor of the power modules for satisfying the required charging amount of the EV (S550).

The EV charger may determine whether the power modules are operable at the determined load factor (S555).

When the power modules are operable at the determined load factor, the EV charger may operate the power modules in consideration of the heat generation rates of the power modules (S560).

When the power modules cannot operate at the determined load factor, the EV charger may increase a load factor of a power module having a low heat generation rate to operate the power module (S565).

According to embodiments of the present invention, an EV charger including a power module can operate the power module at maximum load efficiency.

According to embodiments of the present invention, the EV charger can operate the power modules in consideration of heat generation rates.

In addition, the effects obtained by the present invention are not limited to the above-mentioned effects, and other effects which are not mentioned can be clearly understood by those skilled in the art to which the present invention pertains from the above description.

While the present invention has been mainly described with reference to exemplary embodiments, it should be

understood that the present invention is illustrative and is not limited to the embodiments, and various modifications and applications can be devised by those skilled in the art to which the present invention pertains without departing from the gist of the present invention. For example, each component specifically shown in the exemplary embodiments can be modified and implemented. In addition, it should be construed that differences related to these modifications and applications are included within the scope of the present invention defined by the appended clams.

## Claims

**1.** A method of operating an electric vehicle (EV) charger including a power module, the method comprising:

determining a required charging amount of an EV;
when an EV charger operates power modules at maximum load efficiency, determining the number of power modules required for satisfying the required charging amount of the EV;
determining whether the number of power modules disposed in the EV charger is greater than the number of determined power modules;
when the number of power modules disposed in the EV charger is greater than the number of determined power modules, determining a load factor that becomes a maximum load efficiency of the power modules;
determining whether the power modules are operable at the determined load factor; and
when the power modules are operable at the determined load factor, operating the power modules in consideration of heat generation rates of the power modules,
wherein the required charging amount is a charging power amount or a charging voltage.

**2.** The method of claim 1, wherein the operating of the power modules in consideration of the heat generation rates of the power modules includes selecting and operating the power modules in ascending order of heat generation rate to satisfy the required charging amount of the EV.

**3.** The method of claim 1 or claim 2, further comprising, when the power modules are inoperable at the determined load factor, increasing a load factor of a power module having a low heat generation rate and operating the power modules.

**4.** The method of any one of claims 1 to 3, further comprising:

when the number of power modules disposed in the EV charger is smaller than the number of determined power modules, determining whether a maximum power amount of the power modules disposed in the EV charger is greater than the required charging amount of the EV; and
when the maximum power amount of the power modules disposed in the EV charger is smaller than the required charging amount of the EV, operating the power modules disposed in the EV charger to produce the maximum power amount.

**5.** The method of claim 4, further comprising:

when the maximum power amount of the power modules disposed in the EV charger is greater than the required charging amount of the EV, determining a load factor of the power modules for satisfying the required charging amount of the EV;
determining whether the power modules are operable at the determined load factor; and
when the power modules are operable at the determined load factor, operating the power modules in consideration of the heat generation rates of the power modules.

**6.** The method of claim 4 or claim 5, further comprising:

when the maximum power amount of the power modules disposed in the EV charger is greater than the required charging amount of the EV, determining a load factor of the power modules for satisfying the required charging amount of the EV;
determining whether the power modules are operable at the determined load factor; and
when the power modules are inoperable at the determined load factor, increasing a load factor of a power module having a low heat generation rate and operating the power modules.

**7.** The method of any one of claims 1 to 6, wherein the power module is provided as a plurality of power modules, and

power outputs of the plurality of power modules are the same.

**8.** The method of any one of claims 1 to 7, wherein the determining of the number of power modules required for satisfying the required charging amount of the EV includes determining the number of power modules using Equation 1:

required number of power modules = required charging amount of EV / (capacity of power module * maximum load efficiency of power module).

**9.** The method of any one of claims 1 to 8, wherein the heat generation rates of the power modules are heat generation rates in consideration of the heat generation rates of the power modules itself and an arrangement of the power modules in the EV charger.

**10.** The method of any one of claims 1 to 9, wherein the determining of the load factor that becomes the maximum load efficiency of the power modules includes determining a load factor using a lookup table that indicates load efficiency according to the load factor of the power modules.

**11.** An electric vehicle (EV) charger comprising:

a plurality of power modules;
a communication module configured to communicate with an interior and/or an exterior of an EV charger; and
a control module,
wherein the control module:

determines a required charging amount of the EV; determines the number of power modules required for satisfying the required charging amount of the EV when the EV charger operates the power modules at maximum load efficiency;
determines whether the number of the plurality of power modules is greater than the number of determined power modules;
determines a load factor that becomes a maximum load efficiency of the power modules when the number of the plurality of power modules is greater than the number of determined power modules;
determines whether the power modules are operable at the determined load factor; and
operates the power modules in consideration of heat generation rates of the power modules when the power modules are operable at the determined load factor, and
the required charging amount is a charging power amount or a charging voltage.

**12.** The EV charger of claim 11, wherein the control module selects and operates the power modules in ascending order of heat generation rate to satisfy the required charging amount of the EV.

**13.** The EV charger of claim 11 or claim 12, wherein, when the power modules are inoperable at the determined load factor, the control module increases a load factor of a power module having a low heat generation rate and operates the power modules.

**14.** The EV charger of any one of claims 11 to 13, wherein the control module:

determines whether a maximum power amount of the power modules disposed in the EV charger is greater than the required charging amount of the EV when the number of power modules disposed in the EV charger is smaller than the number of determined power modules; and
operates the power modules disposed in the EV charger to produce the maximum power amount when the maximum power amount of the power modules disposed in the EV charger is smaller than the required charging amount of the EV.

**15.** The EV charger of claim 14, wherein the control module:

determines a load factor of the power modules for satisfying the required charging amount of the EV when the maximum power amount of the power modules disposed in the EV charger is greater than the required charging

amount of the EV;
determines whether the power modules are operable at the determined load factor; and
operates the power modules in consideration of heat generation rates of the power modules when the power modules are operable at the determined load factor.

[FIG. 1A]

CHARGER
110
POWER MODULE 1
POWER MODULE 2
100
POWER MODULE N
102
CONTROL MODULE
COMMUNICATION MODULE
104

[FIG. 1B]

112
110
FAN
116
140
130
AC
GRID
EV
BATTERY
118
PROCESSOR
120
114

[FIG. 2]

PM#1
211
210
PM#2
212
230
PM#3
213
PM#4
214
PM#1
221
PM#2
222
220
PM#3
223
PM#4
224
PM#5
225
240
PM#6
226
PM#7
227

[FIG. 3]

MAXIMUM LOAD EFFICIENCY
97%
96%
95%
94%
93%
92%
91%
90%
89%
88%
87%
86%
85%
0%
10%
20%
30%
40%
50%
60%
70%
80%
90%
100%
LOAD FACTOR
CHARGING VOLTAGE (V)
1000
950
850
750
600

[FIG. 4A]

PM#1
PM#2
PM#3
PM#4
PM#5
411
412
413
414
415
410
420

[FIG. 4B]

PM#1
PM#2
PM#3
PM#4
PM#5
431
432
433
434
435
430
440

[FIG. 5A]

S505
DETERMINE REQUIRED CHARGING AMOUNT OF ELECTRIC VEHICLE
S510
DETERMINE NUMBER OF POWER MODULES REQUIRED FOR SATISFYING REQUIRED CHARGING AMOUNT OF EV WHEN POWER MODULES OPERATE AT MAXIMUM LOAD EFFICIENCY,
S515
IS NUMBER OF POWER MODULES DISPOSED IN EV CHARGER GREATER THAN NUMBER OF DETERMINED POWER MODULES?
NO
S540
YES
S520
DETERMINE LOAD FACTOR THAT BECOMES MAXIMUM LOAD EFFICIENCY OF POWER MODULES
S525
ARE POWER MODULES OPERABLE AT DETERMINED LOAD FACTOR?
NO
S535
INCREASE LOAD FACTOR OF POWER MODULE HAVING LOW HEAT GENERATION RATE TO OPERATE POWER MODULE
YES
S530
OPERATE POWER MODULES IN CONSIDERATION OF HEAT GENERATION RATES OF POWER MODULES

[FIG. 5B]

S515
NO
S540
MAXIMUM POWER AMOUNT OF POWER MODULES DISPOSED IN EV CHARGER > REQUIRED CHARGING AMOUNT OF EV?
NO
S545
OPERATE POWER MODULES DISPOSED IN EV CHARGER TO PRODUCE MAXIMUM POWER AMOUNT
YES
S550
DETERMINE LOAD FACTOR OF POWER MODULES FOR SATISFYING REQUIRED CHARGING AMOUNT OF EV
S555
ARE POWER MODULES OPERABLE AT ARE POWER MODULES OPERABLE AT DETERMINED LOAD FACTOR
NO
S565
INCREASE LOAD FACTOR OF POWER MODULE HAVING LOW HEAT GENERATION RATE TO OPERATE POWER MODULE
YES
S560
OPERATE POWER MODULES IN CONSIDERATION OF HEAT GENERATION RATES OF POWER MODULES

Europäisches Patentamt
European Patent Office
Office européen des brevets

# EUROPEAN SEARCH REPORT

Application Number
EP 26 16 3196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2014/021922 A1 (KIM JEONG GEUN [KR]) 23 January 2014 (2014-01-23)<br>* paragraphs [0032], [0047] - [0068], [0081] - [0120]; figures 2, 4-7 * | 1,4, 7-11,14<br>2,3,5,6, 12,13,15 | INV.<br>B60L53/10<br>B60L53/30<br>B60L53/302<br>B60L53/62<br>H02J7/92<br>H02J7/90<br>H02M7/23<br><br>ADD.<br>B60L53/67<br>H02J7/40 |
| X<br>Y<br>A | US 2022/166240 A1 (HWANG HO CHUL [KR] ET AL) 26 May 2022 (2022-05-26)<br>* paragraphs [0056] - [0082], [0098] - [0106]; claim 18; figures 1-5, 10 * | 1,4,7-9, 11,14<br>2,3,12, 13<br>5,6,10, 15 | |
| Y<br>A | US 2020/036210 A1 (MURATSU HIROKI [JP]) 30 January 2020 (2020-01-30)<br>* paragraphs [0072] - [0074]; figure 5 * | 2,3,5,6, 12,13,15<br>1,11 | |
| | | | TECHNICAL FIELDS SEARCHED (IPC) |
| | | | B60L<br>H02J<br>H02M |

The present search report has been drawn up for all claims

| Place of search | Date of completion of the search | Examiner |
|---|---|---|
| The Hague | 16 July 2026 | Bronski, Bartlomiej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01) 4

## ANNEX TO THE EUROPEAN SEARCH REPORT ON EUROPEAN PATENT APPLICATION NO. EP 26 16 3196

This annex lists the patent family members relating to the patent documents cited in the above-mentioned European search report. The members are as contained in the European Patent Office EDP file on The European Patent Office is in no way liable for these particulars which are merely given for the purpose of information.

16-07-2026

| Patent document cited in search report | Publication date | Patent family member(s) | Publication date |
|---|---|---|---|
| US 2014021922 A1 | 23-01-2014 | CN 103580257 A | 12-02-2014 |
| | | EP 2690745 A2 | 29-01-2014 |
| | | JP 5706474 B2 | 22-04-2015 |
| | | JP 2014023426 A | 03-02-2014 |
| | | KR 20140015739 A | 07-02-2014 |
| | | US 2014021922 A1 | 23-01-2014 |
| US 2022166240 A1 | 26-05-2022 | EP 4001000 A1 | 25-05-2022 |
| | | GB 2615437 A | 09-08-2023 |
| | | JP 7216844 B2 | 01-02-2023 |
| | | JP 2022548807 A | 22-11-2022 |
| | | KR 102267043 B1 | 18-06-2021 |
| | | KR 102319685 B1 | 01-11-2021 |
| | | US 2022166240 A1 | 26-05-2022 |
| | | WO 2022065634 A1 | 31-03-2022 |
| US 2020036210 A1 | 30-01-2020 | JP 7147325 B2 | 05-10-2022 |
| | | JP 2020018106 A | 30-01-2020 |
| | | US 2020036210 A1 | 30-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20250030530